# EUROPÄISCHE PATENTSCHRIFT

(11) **EP 1 564 044 B1**
(45) Veröffentlichungstag und Bekanntmachung des Hinweises auf die Patenterteilung: **21.12.2011**
(21) Anmeldenummer: 04025714.9
(22) Anmeldetag: 29.10.2004
(51) Int. Cl.: B60H 1/00

(54) **Befestigungsvorrichtung mit einer Sensoreinrichtung zur Bestimmung einer Innenraumfeuchte und einer Feuchtigkeitsbeschlagsneigung**
Mounting means with a sensor for determining the humidity and incipient fogging in a compartment
Dispositif de fixation d'un capteur permettant de déterminer l'humidité et la tendance à s'embuer dans un compartiment

(30) Priorität: 16.02.2004 DE 102004007341
(43) Veröffentlichungstag der Anmeldung: 17.08.2005
(73) Patentinhaber: Sitronic Ges. für elektrotechnische Ausrüstung mbH & Co. KG, 71116 Gärtringen (DE)
(72) Erfinder: Stauss, Gerold, 71083 Herrenberg (DE); Raab, Christoph Dr., 70180 Stuttgart (DE)
(74) Vertreter: Kohler Schmid Möbus

(56) Entgegenhaltungen:
- DE-A1- 19 722 577
- DE-A1- 19 755 008
- US-A- 5 701 752
- US-A1- 2001 032 470
- US-B1- 6 422 062

## Beschreibung

Die vorliegende Erfindung betrifft eine Befestigungsvorrichtung mit einer Sensoreinrichtung zur Bestimmung einer Innenraumfeuchte eines von einer Umwandung begrenzten Innenraumvolumens, z.B. eines KFZ-Fahrgastraumes, und einer Feuchtigkeitsbeschlagsneigung einer Innenoberfläche der Umwandung. Die Sensoreinrichtung umfasst einen Taupunktsensor mit einem Feuchtesensorelement und einem Temperatursensor, wobei das Feuchtesensorelement und der Temperatursensor eine thermische Kopplung aufweisen und einen Oberflächentemperatursensor. Die Sensoranordnung ist insbesondere zur Erfassung des Beschlagens der Innenseite einer KFZ-Fensterscheibe und der Feuchte im Fahrzeuginnenraum geeignet.

Zur Beschlagsvermeidung bzw. Messung der Innenraumfeuchte sind bereits mehrere Lösungen bekannt. In der US 6,422, 062 B1, der EP1380481 A2 und der EP1306242 A1 wird vorgeschlagen ein Feuchtesensorelement direkt auf oder in der unmittelbaren Umgebung der Windschutzscheibe anzubringen. Dieses Sensorelement misst die relative Luftfeuchte. Aus den daraus gewonnenen Daten werden Rückschlüsse auf die Beschlagsneigung der Scheibe gezogen. Weiter schlägt die EP1306242 A1 vor zur Beschlagsvermeidung zusätzlich die Temperatur im Fahrgastraum eines KFZ zu berücksichtigen.

Aus der WO 02/33395 A1 ist ein Taupunktsensor bekannt. Wird einem gasförmigen Medium, z.B. Wasserdampf, Wärme entzogen, wie dies z.B. an der Innenoberfläche einer KFZ-Fensterscheibe geschehen kann, so verdichtet es sich bei entsprechender Temperatur zu einer Flüssigkeit, z.B. Wasser. Diese Temperatur, bei einer bestimmten relativen Luftfeuchtigkeit, wird als Taupunkt bezeichnet und kann aus einer gemessenen relativen Luftfeuchte (Innenraumfeuchte) und einer gemessenen Lufttemperatur errechnet werden. Liegt die Temperatur an einer Oberfläche bei einer bestimmten relativen Luftfeuchtigkeit nahe am Taupunkt, so neigt die Oberfläche dazu zu Beschlagen (Feuchtigkeitsbeschlagsneigung), d.h. es kondensiert die Flüssigkeit an der Oberfläche aus. Der Taupunktsensor umfasst eine Montagebasis auf der ein Luftfeuchtesensor und ein Lufttemperatursensor angeordnet sind. Auf der Montagebasis ist eine thermisch leitfähige Beschichtung aufgebracht, die den Luftfeuchtesensor und den Lufttemperatursensor thermisch kontaktieren. Da der Luftfeuchtesensor und der Lufttemperatursensor durch die thermische Kontaktierung bei gleicher Temperatur Daten erfassen, ist es möglich aus den erfassten Daten der Sensoren den Taupunkt am Ort der Montagebasis des Taupunktsensors zu ermitteln.

Nachteilig an den Lösungen gemäß Stand der Technik ist es, dass ein Temperaturunterschied zwischen Feuchtesensor und Scheibenoberfläche besteht und damit die gemessene relative Feuchte am Sensor nicht der relativen Feuchte an der Scheibe entspricht. Dadurch kann die Beschlagsneigung nur ungenau bestimmt werden. Weiter nachteilig ist, dass diese Anordnung keine genaue Information über die relative Luftfeuchte in der Fahrgastzelle liefert, die ein entscheidendes Komfortmerkmal ist.

Der Erfindung liegt die Aufgabe zugrunde, eine Befestigungsvorrichtung zur Montage einer Sensorvorrichtung bereitzustellen, die die Nachteile des Stands der Technik vermeiden, wobei insbesondere die Feuchtigkeitsbeschlagsneigung einer Trägeroberfläche, d.h. einer Innenoberfläche einer Umwandung eines Innenraumvolumens, insbesondere einer KFZ-Scheibe, als auch die Innenraumfeuchte des Innenraumvolumens, insbesondere einem KFZ-Fahrgastraum, zuverlässig erfasst werden soll.

Hinsichtlich der Befestigungsvorrichtung wird die Aufgabe durch die Vorrichtung des Ansprunchs 1 gelöst. Die abhängigen Ansprüche stellen bevorzugte Ausführungsformen der Erfindung dar.

Die erfindungsgemäße Sensoreinrichtung zur Bestimmung einer Innenraumfeuchte und/oder eines Innenraumtaupunkts eines von einer Umwandung begrenzten Innenraumvolumens, insbesondere eines KFZ-Fahrgastraumes und einer Feuchtigkeitsbeschlagsneigung einer Innenoberfläche der Umwandung umfasst einen Taupunktsensor mit einem Feuchtesensorelement und einem Temperatursensor, wobei das Feuchtesensorelement und der Temperatursensor eine thermische Kopplung aufweisen und einen Oberflächentemperatursensor. Die thermische Kopplung bewirkt, dass das Feuchtesensorelement und der Temperatursensor im Wesentlichen die gleiche Temperatur, nämlich die Temperatur des Innenraumes, d.h. der darin befindlichen Luft aufweisen oder zumindest eine in direkter Beziehung zur Innenraumtemperatur stehende Temperatur. Erfindungsgemäß ist der Taupunktsensor zur Messung einer Luftfeuchtigkeit und einer Raumtemperatur des Innenraumvolumens eingerichtet und der Oberflächentemperatursensor ist zur Messung einer Temperatur der Innenoberfläche eingerichtet.

Im Unterschied zum Stand der Technik ist vorgesehen den Taupunktsensor mit dem Feuchtesensorelement und dem Temperatursensor im Innenraum, z.B. eines KFZ-Fahrgastraumes zu montieren und einen weiteren Temperatursensor (Oberflächentemperatursensor) an einer Fensterscheibe (Scheibe) des Fahrgastraumes, wogegen im Stand der Technik das Feuchtesensorelement auf die Scheibe geklebt ist. Die erfindungsgemäße Anordnung ermöglicht eine genaue Bestimmung des Taupunkts, da sowohl das Feuchtesensorelement als auch der Temperaturfühler die gleiche Raumtemperatur aufweisen und nicht auf die Scheibentemperatur gebracht werden müssen. Es muss lediglich ein Sensor, d.h. der Oberflächentemperatursensor, auf die Scheibentemperatur gebracht werden, was wesentlich weniger Aufwand voraussetzt, als zwei Sensoren auf die Scheibentemperatur zu bringen. Weiter ist der Aufwand einen einzelnen Temperaturfühler auf der Scheibe zu montieren deutlich geringer als der Aufwand zwei Sensoren auf die Scheibe zu montieren. Die Kosten für den Montageaufwand sind dabei größer als die Bauteilkosten eines zusätzlichen Temperaturfühlers. Die erfindungsgemäße Sensoreinrichtung ermöglicht ein zuverlässiges Erfassen der Beschlagsneigung, z.B. der Windschutzscheibe. Dadurch kann dem Beschlagen der Scheibe zuverlässig, z.B. mittels Steuerung einer KFZ-Klimaanlage gegen gesteuert werden. Zusätzlich wird die Innenraumfeuchte im KFZ-Fahrgastraum gemessen. Zu niedrige oder zu hohe Luftfeuchte in der Fahrgastzelle wirkt sich negativ auf das Wohlbefinden der Insassen aus. Wird die Feuchte gemessen, kann eine Klimaregelung die Feuchte auf optimale Werte regeln.

Bevorzugt ist der Oberflächentemperatursensor ein berührender Temperatursensor, insbesondere ein NTC- oder ein PTC-Sensorelement. Dieses Sensorelement ist so an der Trägeroberfläche, insbesondere der Scheibe, montiert, dass seine Temperatur möglichst gut der Temperatur der Trägeroberfläche, insbesondere der Scheibe, entspricht.

Bevorzugt ist zwischen dem Oberflächentemperatursensor und der Trägeroberfläche, insbesondere der Scheibe, ein gut wärmeleitendes Material eingebracht, das mechanische Unebenheiten bzw. Toleranzen der Trägeroberfläche bzw. des Oberflächentemperatursensors ausgleichen kann.

Bevorzugt ist eine thermische Entkopplung des Oberflächentemperatursensors vom Taupunktsensor vorgesehen. Diese kann z.B. daraus bestehen, dass eine Verbindung der Sensoren, z.B. zur Ankopplung an eine Auswerteeinheit, aus schlecht wärmeleitenden Materialien gefertigt ist, z.B. aus Kunststoff. Durch diese Entkopplung wird eine möglichst genaue Messung der Oberflächentemperatur der Innenoberfläche durch den Oberflächentemperatursensor ermöglicht. Weiter wird die Messung mittels des Taupunktsensors nicht durch thermische Kopplung an die Innenoberfläche verfälscht.

Bevorzugt umfasst die Sensoreinrichtung eine Leiterplatte, wobei der Taupunktsensor auf der Leiterplatte montiert ist. Dies ermöglicht eine einfache Handhabung der Sensoreinrichtung bei einer Montage z.B. in einem KFZ.

In einer bevorzugten Ausführung der erfindungsgemäßen Sensoreinrichtung umfasst die Sensoreinrichtung eine flexible, bevorzugt mit Leiterbahnen versehene thermisch leitende Folie, wobei der Oberflächentemperatursensor auf der Folie befestigt ist. Die Folie ist dabei bevorzugt elektrisch leitend mit der Leiterplatte verbunden. Diese Ausführungsform ermöglicht eine thermische Kopplung des Oberflächensensors an die Innenoberfläche und den Anschluss des Oberflächentemperatursensors an die Auswerteeinheit unter Verwendung nur eines Bauteils.

In einer weiteren Ausführungsform der erfindungsgemäßen Sensoreinrichtung ist der Oberflächentemperatursensor auf der Leiterplatte montiert. Diese Ausführungsform eignet sich insbesondere zu einer raschen Montage der Sensoreinrichtung. Die Leiterplatte weist in dieser Ausführungsform der erfindungsgemäßen Sensoreinrichtung bevorzugt eine langgestreckte Grundform auf. Die Grundform wird aus einem vorstehenden Ende und einer Trägerfläche gebildet, wobei der Oberflächentemperatursensor am vorstehenden Ende montiert ist und der Taupunktsensor und die Auswerteeinheit auf der Trägerfläche angeordnet sind. Durch die langgestreckte Grundform und die beschriebene Anordnung des Taupunktsensors, der Auswerteeinheit und des Oberflächentemperatursensors wird eine thermische Entkopplung des Oberflächentemperatursensors vom Taupunktsensor aufgrund deren räumlicher Beabstandung erreicht.

In einer bevorzugten Ausführungsform ist vorzugsweise auf der Leiterplatte, insbesondere auf der Trägerfläche eine Auswerteeinheit vorgesehen, welche die Messsignale des Feuchtesensors und des in unmittelbarer Nähe des Feuchtesensors befindlichen Temperatursensors verarbeitet und daraus den Taupunkt errechnet.

Bevorzugt ist die Auswerteeinheit eingerichtet, das Messsignal des Oberflächentemperatursensor mit einer Funktion des Messsignals des Oberflächentemperatursensors und des Temperatursensors am Feuchtelement durch Addition oder Multiplikation zu korrigieren und daraus die Oberflächentemperatur zu ermitteln. Der Oberflächentemperatursensor steht nicht in unmittelbarem körperlichen Kontakt mit der Fahrzeugscheibe, sodass gegebenenfalls eine Korrektur des von diesem gelieferten Messsignals notwendig ist. Weiterhin bevorzugt wird die so ermittelte Oberflächentemperatur abhängig von Signalen eines Sonnensensors, eines Regenssensors, eines Außentemperatursensors und/oder eines Geschwindigkeitssensors korrigiert.

Bevorzugt wird die Funktion zum Messsignal des Oberflächentemperatursensors addiert.

Bevorzugt ist die Funktion die mit einer Konstanten gewichtete Differenz der Messsignale des Oberflächentemperatursensors und des Temperatursensors am Feuchtelement. Dadurch wird eine erste Näherung für die Korrektur des Messsignals des Oberflächentemperatursensors erzielt, die häufig für praktische Anwendungen ausreichend ist.

Besonders bevorzugt ist die Auswerteeinheit eingerichtet, den berechneten Taupunkt mit der ermittelten Oberflächentemperatur zu vergleichen und daraus die Beschlagsneigung zu ermitteln.

Bevorzugt ist die Auswerteeinheit eingerichtet, um ein Alarmsignal bei einem Überschreiten eines relativen Luftfeuchtigkeitswertes an einem Montageort des Oberflächentemperatursensors auszugeben. Bei dem Montageort handelt es sich bei Verwendung der erfindungsgemäßen Sensoreinrichtung innerhalb eines KFZ-Fahrgastraumes bevorzugt um die Innenoberfläche der Windschutzscheibe, oder einen Ort auf der Leiterplatte, also den Ort an dem der Oberflächentemperatursensor montiert ist. Dadurch kann ein Fahrzeuginsasse z.B. durch einschalten des Gebläses im KFZ einem Beschlagen der Windschutzscheibe zuvor kommen.

Besonders vorteilhaft weist die Auswerteeinheit eine Schnittstelle, insbesondere Kline-, CAN- oder LIN-Bus, zu einer Klimasteuerung, insbesondere einer KFZ-Klimaanlage, auf. Dadurch kann eine automatisierte Vermeidung eines Beschlagens z.B. der Windschutzscheibe erfolgen. Die Auswerteeinheit kann hierzu den Taupunkt der Luft im Raum, insbesondere dem KFZ-Fahrgastraum, und die Innenoberflächentemperatur der Umwandung, insbesondere der KFZ-Scheibe, ausgeben. Weiter kann von der Auswerteeinheit die relative Luftfeuchte und Temperatur an der Innenoberfläche der Umwandung ausgegeben werden. Es kann weiter die relative Luftfeuchte und Temperatur an der Position des Feuchtesensors von der Auswerteeinheit ausgegeben werden.

Eine zuverlässige Luftfeuchtigkeitsmessung, bei gleichzeitigem Schutz der Sensoreinrichtung vor, z.B. Verschmutzung, ist mit der erfindungsgemäßen Sensoreinrichtung insbesondere dann vornehmbar, wenn die Sensoreinrichtung ein Gehäuse mit einem Deckel mit einer feuchtigkeitsdurchlässigen Membran aufweist, wobei der Taupunktsensor innerhalb des Gehäuses angeordnet ist. Durch die Membran ist gewährleistet, dass die Luftfeuchtigkeit am Ort des Taupunktsensors der Luftfeuchtigkeit im Innenraumvolumen entspricht.

Die Sensoreinrichtung umfasst bevorzugt eine Sensorhalterung mit einer Stirnfläche, wobei der Oberflächentemperatursensor derart an der Stirnfläche befestigt ist, dass der Oberflächentemperatursensor thermisch leitend an der Innenoberfläche, bevorzugt durch Verkleben der Stirnfläche mit der Innenoberfläche, befestigbar ist. Hierdurch wird eine zuverlässige und einfache Befestigung des Oberflächensensors an einer Innenoberfläche ermöglicht. Das Verkleben erfolgt bevorzugt mit einem gut wärmeleitenden Klebstoff.

Dabei wird bevorzugt eine Klebefolie verwendet, die mit einer abziehbaren Schutzfolie abgedeckt sein kann. Dies erleichtert die Montage des Oberflächentemperatursensors zusätzlich.

Eine weitere Ausführungsform einer erfindungsgemäßen Befestigungsvorrichtung mit einer Sensoranordnung umfasst:
- eine als Rückspiegelfuß ausgeführte Abdeckung, worin eine Elektronikeinheit der Sensoranordnung eingebaut ist,
- einen eine Röhrenform aufweisenden Fortsatz an der Abdeckung und
- eine auf den Fortsatz aufschiebbaren Sensorhalterung mit einer einer Innenoberfläche einer KFZ-Scheibe angepassten Stirnfläche.

Die Sensorhalterung ist dabei derart auf dem Fortsatz verschiebbar angeordnet, dass die Stirnfläche, bei in einem KFZ-Fahrgastraum montierten Rückspiegelfuß, durch ein Verschieben der Sensorhalterung mit der Innenoberfläche der KFZ-Scheibe zum Anliegen kommen kann. Diese Ausführungsform einer Befestigungsvorrichtung kann zur Befestigung beliebiger Sensoranordnungen verwendet werden. Bevorzugt wird jedoch die erfindungsgemäße Sensoreinrichtung mit der erfindungsgemäßen Befestigungsvorrichtung im KFZ-Innenraum befestigt. Die Sensoranordnung umfasst dann eine erfindungsgemäße Sensoreinrichtung, wobei der Oberflächentemperatursensor derart an der Stirnfläche befestigt ist, dass der Oberflächentemperatursensor thermisch leitend an der Innenoberfläche der KFZ-Scheibe, bevorzugt durch Verkleben der Stirnfläche mit der Innenoberfläche, befestigbar ist und der Taupunktsensor innerhalb der Abdeckung angeordnet ist. Mit der erfindungsgemäßen Befestigungsvorrichtung wird ein guter Schutz der Sensoreinrichtung gegen Verschmutzung und/oder Beschädigung, insbesondere beim Scheibenputzen erreicht. Weiter ist eine gute thermische Anbindung des Oberflächentemperatursensors an die Scheibe gewährleistet. Die erfindungsgemäße Befestigungsvorrichtung ermöglicht außerdem eine einfache Montage.

Die oben beschriebenen Ausführungsformen der erfindungsgemäßen Sensoreinrichtung, bei denen der Oberflächentemperatursensor auf der Leiterplatte angeordnet ist, werden bevorzugt mittels einer Befestigungsvorrichtung mit einem die Sensoreinrichtung umschließenden Gehäuse mit einem Halter an einer Umwandung des Innenraumvolumens befestigt. Dabei ist eine flexible und wärmeleitfähige Masse, bevorzugt eine Silikon-Wärmeleitmasse, an einer Stirnfläche des vorstehenden Endes der Leiterplatte, an einem Montageort des Oberflächentemperatursensors auf der Leiterplatte angebracht. Das Gehäuse mit Halter ist dabei eingerichtet, die Leiterplatte mit der Masse an eine Innenoberfläche der Umwandung, bevorzugt eine Windschutzscheibe zu drücken. Die derart aufgebaute Befestigungsvorrichtung ermöglicht eine rasche Montage der erfindungsgemäßen Sensoreinrichtung, wobei eine gute thermische Ankopplung des Oberflächentemperatursensors an die Innenoberfläche, z.B. der Windschutzscheibe kostengünstig erreicht wird.

In einer bevorzugten Ausführungsform der Befestigungsvorrichtung ist die flexible, wärmeleitende Masse als Kappe ausgebildet, die auf das Ende der Leiterplatte am Montageort des Oberflächentemperatursensors geschoben wird.

In einer weiteren bevorzugten Ausführungsform der Befestigungsvorrichtung ist am Montageort des Oberflächentemperatursensors ein Metallteil, z.B. ein Stanz-Biege-Teil, befestigt, z.B. durch Löten. Das Wärmeleitmaterial ist an diesem Metallteil, z.B. durch Umspritzen bzw. Umgießen, angebracht.

Die Erfindung wird nachfolgend anhand von Ausführungsbeispielen unter Bezugnahme auf die Zeichnungen näher erläutert. Die Figuren der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

Die Figur 1 zeigt eine erfindungsgemäße Sensoreinrichtung in einem KFZ-Rückspiegelfuß integriert, der in einem KFZ-Fahrgastraum montiert ist.

Die Figur 2a zeigt eine erfindungsgemäße Befestigungsvorrichtung als KFZ-Rückspiegelfuß ausgeführt, der in einem KFZ-Fahrgastraum montiert ist.

Die Figur 2b zeigt eine erfindungsgemäße Befestigungsvorrichtung mit einer darin eingebauten Elektronikanordnung.

Die Figur 3a zeigt eine weitere erfindungsgemäße Befestigungsvorrichtung in einer Seitenansicht.

Die Figur 3b zeigt die Befestigungsvorrichtung nach Figur 3a in einer Draufsicht.

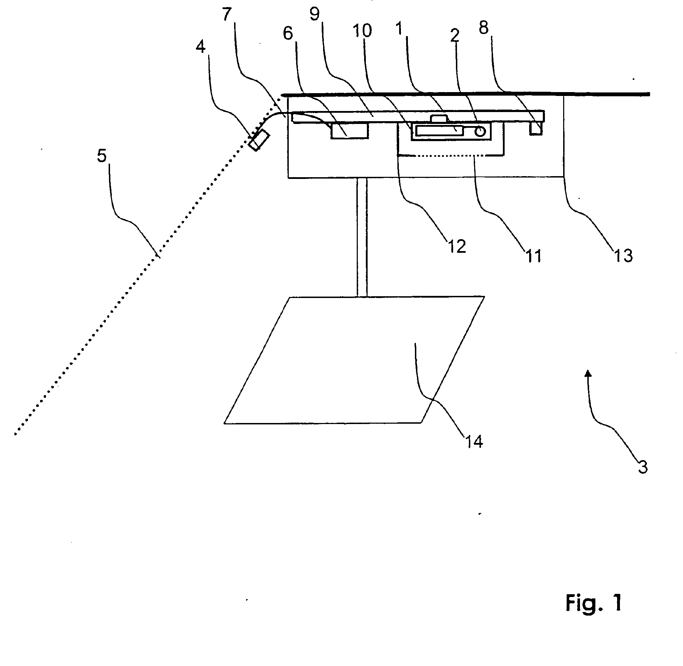

In der Figur 1 ist eine erfindungsgemäße Sensoreinrichtung gezeigt, die in einem KFZ-Rückspiegelfuß 13, der in einem KFZ-Fahrgastraum 3 montiert ist, integriert ist. Mit der erfindungsgemäßen Sensoreinrichtung wird die Beschlagsneigung der KFZ-Fensterscheibe 5 durch Messung der relativen Innenaumfeuchte und der Innenraumtemperatur mit dem Taupunktsensor 10 ermittelt. Daraus wird der Taupunkt bzw. die absolute Feuchte im Innenraum, wie z.B. aus der WO0233395 A1 bekannt ermittelt. Zusätzlich wird die Scheibentemperatur an einer Innenoberfläche der KFZ-Fensterscheibe 5 mittels des Oberflächentemperatursensors 4 ermittelt. Aus der Scheibentemperatur und dem Taupunkt wird durch die Auswerteeinheit 6 die Beschlagsneigung der Innenoberfläche bestimmt. Die erfindungsgemäße Sensoreinrichtung zur Detektion einer Beschlagsneigung und der Innenraumfeuchte, umfasst einen Taupunktsensor 10, mit einem Feuchtesensorelement 1 und einem Temperatursensor 2, die zueinander gut thermisch gekoppelt sind und in einem Innenraum 3, insbesondere einer KFZ-Fahrgastzelle, angebracht sind. Ferner umfasst die erfindungsgemäße Sensoreinrichtung einen Oberflächentemperatursensor 4, der die Oberflächentemperatur auf der Innenseite einer Außenwand des Innenraums, insbesondere einer KFZ-Scheibe 5, bestimmt und eine Auswerteeinheit 6, die die gemessen Daten auswertet. Der Oberflächentemperatursensor 4 ist vom Feuchtesensorelement 1 und dem Temperatursensor 2 thermisch entkoppelt. Der Oberflächentemperatursensor 4 ist auf die Innenseite der Außenwand, z.B. der KFZ-Scheibe 5, mit einem, insbesondere gut wärmeleitenden, Kleber geklebt. Der Oberflächentemperatursensor 4 ist auf einer flexiblen, bevorzugt mit Leiterbahnen versehenen, gut wärmeleitenden Folie 7 montiert. Die Folie 7 ist auf die Innenseite der Umwandung (Außenwand), z.B. auf die Innenseite der KFZ-Fensterscheibe 5 montiert. Dabei ist eine gute thermische Koppelung des Oberflächentemperatursensors 4 an die Fensterscheibe 5 gewährleistet, da die Folie 7 gut wärmeleitend ist. Unter guter thermischer Koppelung wird dabei verstanden, dass der Oberflächentemperatursensor 4 im wesentlichen die tatsächliche Temperatur der Innenoberfläche annimmt und damit messen kann. Die Auswerteeinheit 6 ist über eine Schnittstelle 8 mit einer Klimasteuerung des Innenraums, z.B. des KFZ-Fahrgastraumes 3, verbunden. Das Feuchtesensorelement 1, der Temperatursensor 2 und die Auswerteeinheit 6 sind auf einer Leiterplatte 9 montiert. Die Folie 7 , die mit dem Oberflächentemperatursensor 4 bestückt ist, ist elektrisch leitend mit der Leiterplatte 9, die mit dem Feuchtesensorelement 1, dem Temperatursensor 2 und der Auswerteeinheit 6 bestückt ist, verbunden. Das Feuchtesensorelement 1, der Temperatursensor 2, die Auswerteeinheit 6 und der Oberflächentemperatursensor 4 können auch alle zusammen auf einer Leiterplatte montiert sein. In diesem Fall ist eine thermische Entkopplung zwischen dem Oberflächentemperatursensor 4 und der Leiterplatte 9 notwendig vorzusehen. Die Anordnung aus Feuchtesensorelement 1 und Temperatursensor 2, also der Taupunktsensor 10 ist im Fuß 13 des Rückspiegels 14 eines Kraftfahrtzeugs montiert. Die Anordnung aus Feuchtesensorelement 1 und Temperatursensor 2 ist durch ein Gehäuse 12 das einen Deckel mit einer feuchtedurchlässigen Membran 11 aufweist geschützt. Die Auswerteeinheit 6 kann eingerichtet sein bei Überschreiten einer einstellbaren Schwelle der relativen Luftfeuchte an der Innenoberfläche der Umwandung, z.B. der KFZ-Scheibe 5 ein Alarmsignal, z.B. über die Schnittstelle 8 auszugeben.

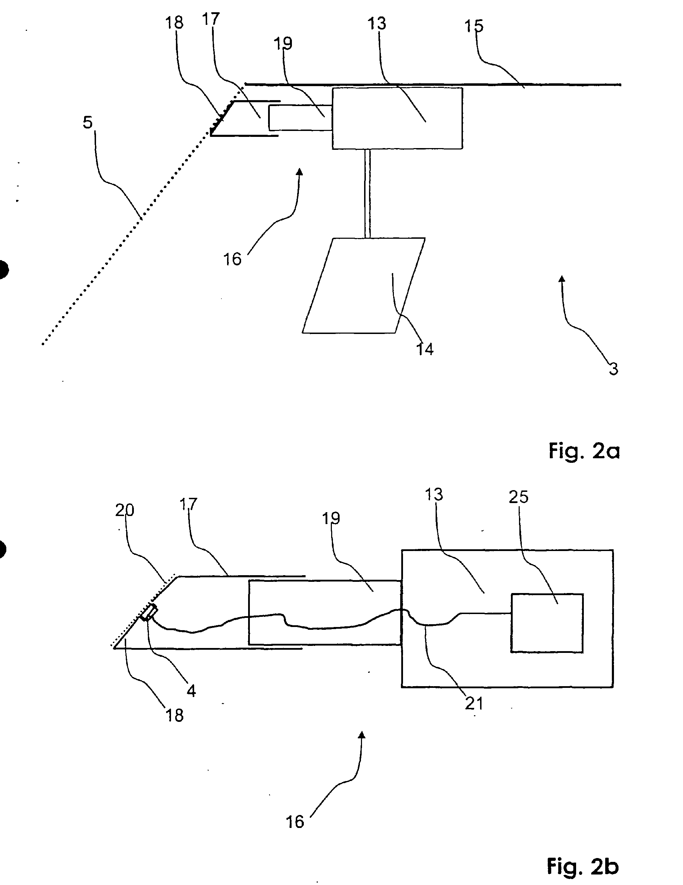

In Figur 2a ist eine erfindungsgemäße Befestigungsvorrichtung, als KFZ-Rückspiegelfuß 13 ausgeführt, dargestellt, der in einem KFZ-Fahrgastraum 3, an dem Fahrzeugdach 15 montiert ist. Der Rückspiegelfuß 13 bildet eine Abdeckung, die mit einem röhrenförmigen Fortsatz 19 erweitert ist. In Figur 2b ist eine erfindungsgemäße Befestigungsvorrichtung mit einer in der Abdeckung eingebauten Elektronikanordnung 25, z.B. einer Auswerteeinheit und/oder einem Taupunktsensor einer erfindungsgemäßen Sensoreinrichtung und/oder weiteren Sensoren, bevorzugt jedoch bestehenden aus Feuchtesensor, Temperatursensor und Auswerteinheit, gezeigt. Die Elektronikeinheit 25 ist in der Abdeckung, d.h. im Rückspiegelfuß 13 eingebaut und mit einer elektrischen Zuleitung 21 mit dem Oberflächentemperatursensor 4 verbunden. Auf den Fortsatz 19 ist ein Sensorhalter 17 aufgeschoben. Vor einer Montage des Spiegelfußes 13 im Fahrzeug ist der Sensorhalter 17 ganz zur Abdeckung bzw. dem Spiegelfuß 13 geschoben und ein Herunterrutschen ist durch geeignete konstruktive Maßnahmen, z.B. eine verrastende Nut, ausgeschlossen. Die Stirnfläche 18 des Sensorhalters 17 ist so ausgeformt, dass er der Windschutzscheibe 5 angepasst ist. In die Stirnfläche 18 des Sensorhalters 17 ist ferner der Oberflächentemperatursensor 4 integriert, so dass der Oberflächentemperatursensor 4 plan mit der Stirnfläche 18 abschließt, d.h. im montierten Zustand inniger Kontakt zwischen Oberflächentemperatursensor 4 und Windschutzscheibe 5 besteht. Auf der Stirnfläche 18 befindet sich eine Klebefolie 20 oder ähnliches, um den Sensorhalter 17 an der Windschutzscheibe 5 zu befestigen. Die Stirnfläche 18 bildet also eine Kontaktfläche, z.B. mit einer Klebefolie 20. Die Klebefolie 20 kann an der Stelle des Oberflächentemperatursensor 4 ausgespart sein. Vor einem Einbau ist die Stirnfläche 18 und die Klebefolie 20 mit einer Schutzfolie versehen.

Bei einem Einbau des Rückspiegels 1 wird zunächst die Schutzfolie entfernt und dann der Rückspiegelfuß 13 bzw. die Abdeckung montiert. Die Reihenfolge kann auch vertauscht werden. Anschließend wird der Sensorhalter 17 zur Windschutzscheibe 5 geschoben und dort verklebt.

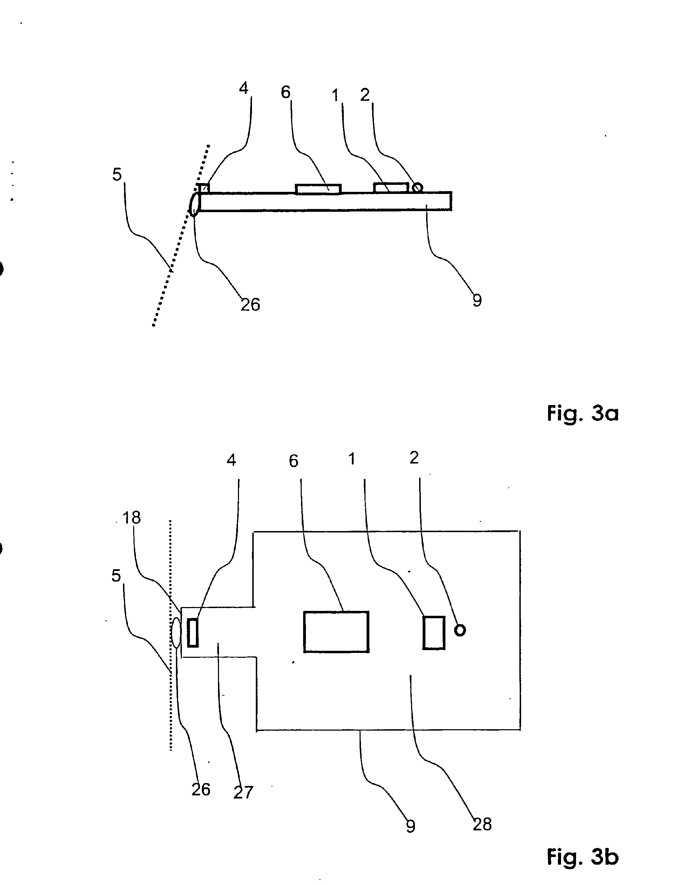

In Figur 3a ist eine weitere Ausführungsform einer erfindungsgemäßen Befestigungsvorrichtung in einer Seitenansicht und in Figur 3b in einer Draufsicht gezeigt. Diese Ausführungsform einer erfindungsgemäßen Befestigungsvorrichtung mit einer Sensoranordnung umfasst:
- eine Leiterplatte 9, auf der als Bauelemente das Feuchtesensorelement 1, der Temperatursensor 2, die Auswerteeinheit 6 und der Oberflächentemperatursensor 4 angebracht sind. Die Leiterplatte 9 weist eine langgestreckte Grundform auf. Diese Grundform besteht aus einem vorstehenden Ende 27 und einer Trägerfläche 28. Die Anordnung der Bauelemente auf der Leiterplatte 9 ist so gewählt, dass der Oberflächentemperatursensor 4 thermisch vom Rest der Bauelemente auf der Leiterplatte 9 entkoppelt ist. Dazu ist der Oberflächentemperatursensor 4 an dem vorstehenden Ende 27 der Leiterplatte 9 angebracht und die restlichen Bauelemente sind auf der Trägerfläche 28 angeordnet.
- eine flexible, wärmeleitfähige Masse 26, z.B. Silikon-Wärmeleitkleber, ist an einer Stirnfläche 18 des vorstehenden Endes 27 der Leiterplatte 9 am Montageort des Oberflächentemperatursensors 4 angebracht. Die Masse 26 dient dazu, innigen, wärmeleitenden Kontakt zur Windschutzscheibe 5 herzustellen und durch ihre Flexibilität mechanische Toleranzen auszugleichen.
- ein Gehäuse mit Halter (in den Figuren nicht gezeigt), das die Leiterplatte 9 mit der Masse 26 an die Windschutzscheibe 5 drückt.

### BEZUGSZEICHEN

- 1: Feuchtesensorelement
- 2: Temperatursensor
- 3: KFZ-Fahrgastraum
- 4: Oberflächentemperatursensor
- 5: Fensterscheibe
- 6: Auswerteeinheit
- 7: Folie
- 8: Schnittstelle
- 9: Leiterplatte
- 10: Taupunktsensor
- 11: Membran
- 12: Gehäuse
- 13: KFZ-Rückspiegelfuß
- 14: KFZ-Rückspiegel
- 15: Fahrzeugdach
- 16: Befestigungsvorrichtung
- 17: Sensorhalterung
- 18: Stirnfläche
- 19: Fortsatz
- 20: Klebefolie
- 21: elektrische Zuleitung
- 25: Elektronikeinheit
- 26: Wärmeleitfähige Silikonmasse
- 27: vorstehendes Ende
- 28: Trägerfläche

## Patentansprüche

1. Befestigungsvorrichtung (16) mit einer Sensoreinrichtung zur Bestimmung einer Innenraumfeuchte bzw. des Innenraumtaupunkts eines von einer Umwandung begrenzten Innenraumvolumens eines KFZ-Fahrgastraumes (3) und einer Feuchtigkeitsbeschlagsneigung einer Innenoberfläche einer Fensterscheibe (5) des KFZ-Fahrgastraumes (3), mit
• einem zur Messung einer Luftfeuchtigkeit und einer Raumtemperatur des Innenraumvolumens eingerichteten Taupunktsensor (10) mit einem Feuchtesensorelement (1) und einem Temperatursensor (2) und
• einem zur Messung einer Temperatur der Innenoberfläche eingerichteten Oberflächentemperatursensor (4),
**dadurch gekennzeichnet, dass**
die Befestigungsvorrichtung als Rückspiegelfuß (13) eines KFZ-Rückspiegels (14) ausgeführt ist, wobei der Taupunktsensor (10) innerhalb der Befestigungsvorrichtung montiert ist, wobei der Oberflächentemperatursensor (4) auf der Innenoberfläche montierbar ist.

2. Befestigungsvorrichtung nach Anspruch 1, **dadurch gekennzeichnet, dass** der Oberflächentemperatursensor ein berührender Sensor, vorzugsweise ein NTC- oder ein PTC-Sensorelement, ist.

3. Befestigungsvorrichtung nach Anspruch 2, **dadurch gekennzeichnet, dass** zwischen dem Oberflächentemperatursensor und der Umwandung ein Material mit hoher thermischen Leitfähigkeit eingebracht ist.

4. Befestigungsvorrichtung nach Anspruch 2 oder 3, **dadurch gekennzeichnet, dass** eine thermische Entkopplung des Oberflächentemperatursensors (4) vom Taupunktsensor (10) vorgesehen ist.

5. Befestigungsvorrichtung nach mindestens einem der vorhergehenden Ansprüche, **dadurch gekennzeichnet, dass** die Sensoreinrichtung eine Leiterplatte (9) umfasst, wobei der Taupunktsensor (10) auf der Leiterplatte (9) montiert ist.

6. Befestigungsvorrichtung nach mindestens einem der vorhergehenden Ansprüche, **dadurch gekennzeichnet, dass** die Sensoreinrichtung eine flexible, bevorzugt mit Leiterbahnen versehene thermisch leitende Folie (7) umfasst, wobei der Oberflächentemperatursensor (4) auf der Folie (7) befestigt ist.

7. Befestigungsvorrichtung nach Anspruch 5 und Anspruch 6, **dadurch gekennzeichnet, dass** die Folie (7) elektrisch leitend mit der Leiterplatte (9) verbunden ist.

8. Befestigungsvorrichtung nach Anspruch 4 und Anspruch 5, **dadurch gekennzeichnet, dass** der Oberflächentemperatursensor (4) auf der Leiterplatte (9) montiert ist.

9. Befestigungsvorrichtung nach Anspruch 8, **dadurch gekennzeichnet, dass** die Leiterplatte (9) eine langgestreckte Grundform, bestehend aus einem vorstehenden Ende (27) und einer Trägerfläche (28) aufweist, wobei der Oberflächentemperatursensor (4) am vorstehenden Ende (27) montiert ist und der Taupunktsensor (10) auf der Trägerfläche (28) angeordnet ist.

10. Befestigungsvorrichtung nach einem der vorhergehenden Ansprüche, **dadurch gekennzeichnet, dass** vorzugsweise auf der Leiterplatte (9), insbesondere auf der Trägerfläche (28) eine Auswerteeinheit (6) vorgesehen ist, die eingerichtet ist, aus dem Messsignal des Taupunktsensors (10) den Taupunkt zu berechnen.

11. Befestigungsvorrichtung nach Anspruch 10, **dadurch gekennzeichnet, dass** die Auswerteeinheit (6) zur Ermittlung der Oberflächentemperatur aus dem Messsignal des Oberflächentemperatursensors (4) ausgelegt ist, wobei bevorzugt die ermittelte Oberflächentemperatur abhängig von Signalen eines Sonnensensors, eines Regenssensors, eines Außentemperatursensors und/oder eines Geschwindigkeitssensors korrigiert wird.

12. Befestigungsvorrichtung nach Anspruch 11, **dadurch gekennzeichnet, dass** die Auswerteeinheit (6) zur Korrektur der ermittelten Oberflächentemperatur mittels einer Funktion des Messsignals des Oberflächentemperatursensors (4) und des Temperatursensors (2) eingerichtet ist.

13. Befestigungsvorrichtung nach Anspruch 12, **dadurch gekennzeichnet, dass** die Auswerteeinheit (6) zur Korrektur der ermittelten Oberflächentemperatur durch Addition der Funktion eingerichtet ist.

14. Befestigungsvorrichtung nach Anspruch 12 oder 13, **dadurch gekennzeichnet dass** die Funktion die mit einer Konstanten gewichtete Differenz der Messsignale des Oberflächentemperatursensors (4) und des Temperatursensors (2) ist.

15. Befestigungsvorrichtung nach einem der Ansprüche 11bis 14, **dadurch gekennzeichnet, dass** die Auswerteeinheit (6) eingerichtet ist, zur Ermittlung der Beschlagsneigung den berechneten Taupunkt mit der ermittelten Oberflächentemperatur zu vergleichen.

16. Befestigungsvorrichtung nach einem der vorhergehenden Ansprüche, **dadurch gekennzeichnet, dass** die Auswerteeinheit (6) eingerichtet ist, um ein Alarmsignal bei einem Überschreiten eines relativen Luftfeuchtigkeitswertes an einem Montageort des Oberflächentemperatursensors (4) auszugeben.

17. Befestigungsvorrichtung nach einem der vorhergehenden Ansprüche, **dadurch gekennzeichnet, dass** die Auswerteeinheit (6) eine Schnittstelle (8), vorzugsweise Kline-, CAN oder LIN-Bus, zu einer Klimasteuerung, bevorzugt einer KFZ-Klimaanlage, aufweist.

18. Befestigungsvorrichtung nach einem der vorhergehenden Ansprüche, **dadurch gekennzeichnet, dass** die Sensoreinrichtung ein Gehäuse (12) mit einem Deckel mit einer feuchtigkeitsdurchlässigen Membran (11) aufweist, wobei der Taupunktsensor (10) innerhalb des Gehäuses (12) angeordnet ist.

19. Befestigungsvorrichtung nach mindestens einem der vorhergehenden Ansprüche, **dadurch gekennzeichnet, dass** die Sensoreinrichtung eine Sensorhalterung mit einer Stirnfläche umfasst, wobei der Oberflächentemperatursensor (4) derart an der Stirnfläche befestigt ist, dass der Oberflächentemperatursensor (4) thermisch leitend an der Innenoberfläche, bevorzugt durch Verkleben der Stirnfläche mit der Innenoberfläche, befestigbar ist.

20. Befestigungsvorrichtung nach Anspruch 19, **dadurch gekennzeichnet, dass** die Stirnfläche eine Klebefolie (20), bevorzugt mit einer abziehbaren Schutzfolie aufweist.

21. Befestigungsvorrichtung (16) nach einem der vorhergehenden Ansprüche, **dadurch gekennzeichnet dass** der Rückspiegelfuß (13) als Abdeckung ausgeführt ist als, worin eine Elektronikeinheit (25) der Sensoranordnung eingebaut ist, einem eine Röhrenform aufweisenden Fortsatz (19) und einer auf den Fortsatz (19) aufschiebbaren Sensorhalterung (17) mit einer einer Innenoberfläche einer KFZ-Scheibe angepassten Stirnfläche (18), wobei die Sensorhalterung (17) derart auf dem Fortsatz (19) verschiebbar angeordnet ist, dass die Stirnfläche (18), bei in einem KFZ-Fahrgastraum (3) montierten Rückspiegelfuß (13), durch ein Verschieben der Sensorhalterung (17) mit der Innenoberfläche der KFZ-Scheibe (5) zum Anliegen kommen kann.

22. Befestigungsvorrichtung nach Anspruch 21 **dadurch gekennzeichnet, dass** der Oberflächentemperatursensor (4) derart an der Stirnfläche (18) befestigt ist, dass der Oberflächentemperatursensor (4) thermisch leitend an der Innenoberfläche der KFZ-Scheibe (5), bevorzugt durch Verkleben der Stirnfläche (18) mit der Innenoberfläche, befestigbar ist und der Taupunktsensor (10) innerhalb des Gehäuses angeordnet ist.

23. Befestigungsvorrichtung mindestens nach Anspruch 5 mit einem Gehäuse mit einem Halter, wobei eine flexible und wärmeleitfähige Masse (26), bevorzugt ein Silikon-Wärmeleitkleber, an einer Stirnfläche (18) des vorstehenden Endes (27) der Leiterplatte (9) an einem Montageort des Oberflächentemperatursensors (4) angebracht ist und das Gehäuse mit Halter eingerichtet ist die Leiterplatte (9) mit der Masse (26) an eine Innenoberfläche, bevorzugt eine Windschutzscheibe (5) zu drücken.

24. Befestigungsvorrichtung nach Anspruch 23 **dadurch gekennzeichnet, dass** die flexible, wärmeleitende Masse als Kappe ausgebildet ist, die auf das Ende der Leiterplatte am Montageort des Oberflächentemperatursensors geschoben werden kann.

25. Befestigungsvorrichtung nach Anspruch 23 oder 24 **dadurch gekennzeichnet, dass** am Montageort des Oberflächentemperatursensors ein Metallteil, insbesondere ein Stanz-Biege-Teil, bevorzugt durch Löten befestigt ist.

## Claims

1. Fastening device (16) comprising a sensor means for determining an interior humidity or an interior dew point of an interior volume delimited by a wall of a vehicle passenger compartment (3), and a fogging-up tendency of an inner surface of a window (5) of the vehicle passenger compartment (3), comprising
- a dew point sensor (10) with a humidity sensor element (1) and a temperature sensor (2) designed for measuring an air humidity and room temperature of the interior volume, and
- a surface temperature sensor (4) designed for measuring a temperature of the inner surface,
**characterized in that** the fastening device is designed as a rear mirror foot (13) of a rear mirror (14) of a vehicle, wherein the dew point sensor (10) is mounted inside of the fastening device, wherein the surface temperature sensor (4) can be mounted to the inner surface.

2. Fastening device according to claim 1, **characterized in that** the surface temperature sensor is a contacting sensor, preferably an NTC or PTC sensor element.

3. Fastening device according to claim 2, **characterized in that** material having good heat conducting properties is introduced between the surface temperature sensor and the wall.

4. Fastening device according to claim 2 or 3, **characterized in that** the surface temperature sensor (4) is thermally decoupled from the dew point sensor (10).

5. Fastening device according to at least one of the preceding claims, **characterized in that** the sensor means comprises a printed board (9), wherein the dew point sensor (10) is mounted to the printed board (9).

6. Fastening device according to at least one of the preceding claims, **characterized in that** the sensor means comprises a flexible heat conducting sheet (7) which is preferably provided with strip conductors, wherein the surface temperature sensor (4) is mounted to the sheet (7).

7. Fastening device according to claims 5 and 6, **characterized in that** the sheet (7) is connected to the printed board (9) in an electrically conducting manner.

8. Fastening device according to claims 4 and 5, **characterized in that** the surface temperature sensor (4) is mounted to the printed board (9).

9. Fastening device according to claim 8, **characterized in that** the printed board (9) has an elongated basic shape consisting of a protruding end (27) and a support surface (28), wherein the surface temperature sensor (4) is mounted to the protruding end (27) and the dew point sensor (10) is disposed on the support surface (28).

10. Fastening device according to any one of the preceding claims, **characterized in that** an evaluation unit (6) is preferably disposed on the printed board (9), in particular on the support surface (28), and is designed to calculate the dew point from the measured signal of the dew point sensor (10).

11. Fastening device according to claim 10, **characterized in that** the evaluation unit (6) is designed to determine the surface temperature from the measured signal of the surface temperature sensor (4), wherein the determined surface temperature is preferably corrected in dependence on signals of a sun sensor, a rain sensor, an external temperature sensor and/or a speed sensor.

12. Fastening device according to claim 11, **characterized in that** the evaluation unit (6) is designed to correct the determined surface temperature using a function of the measured signal of the surface temperature sensor (4) and of the temperature sensor (2).

13. Fastening device according to claim 12, **characterized in that** the evaluation unit (6) is designed to correct the determined surface temperature through addition of the function.

14. Fastening device according to claim 12 or 13, **characterized in that** the function is the difference, weighted by a constant, of the measured signals of the surface temperature sensor (4) and of the temperature sensor (2).

15. Fastening device according to any one of the claims 11 to 14, **characterized in that** the evaluation unit (6) is designed to compare the calculated dew point with the determined surface temperature to determine the fogging-up tendency.

16. Fastening device according to any one of the preceding claims, **characterized in that** the evaluation unit (6) is designed to emit a warning if a relative air humidity value is exceeded at a mounting point of the surface temperature sensor (4).

17. Fastening device according to any one of the preceding claims, **characterized in that** the evaluation unit (6) comprises an interface (8), preferably a Kline, CAN or LIN bus with an air conditioning control, preferably a vehicle air conditioning system.

18. Fastening device according to any one of the preceding claims, **characterized in that** the sensor means comprises a housing (12) having a lid with a moisture-permeable diaphragm (11), wherein the dew point sensor (10) is disposed within the housing (12).

19. Fastening device according to at least one of the preceding claims, **characterized in that** the sensor means comprises a sensor holder with a front surface, wherein the surface temperature sensor (4) is mounted to the front surface such that the surface temperature sensor (4) can be mounted in a thermally conducting manner to the inner surface, preferably through gluing of the front surface to the inner surface.

20. Fastening device according to claim 19, **characterized in that** the front surface comprises a bonding sheet (20), preferably comprising a removable protective sheet.

21. Fastening device (16) according to any one of the preceding claims, **characterized in that** the rear mirror foot (13) is designed as a cover, into which an electronic unit (25) of the sensor arrangement is installed, comprising a tubular projection (19) and a sensor holder (17) which can be pushed onto the projection (19) with a front surface (18) which is adapted to an inner surface of a vehicle window, wherein the sensor holder (17) is disposed on the projection (19) such that it can be displaced such that the front surface (18) can abut the inner surface of the vehicle window (5) through displacing the sensor holder (17) when the rear mirror foot (13) is mounted in a vehicle passenger compartment (3).

22. Fastening device according to claim 21, **characterized in that** the surface temperature sensor (4) is mounted to the front surface (18) such that the surface temperature sensor (4) can be mounted in a thermally conducting manner to the inner surface of the vehicle window (5), preferably through gluing the front surface (18) to the inner surface, and the dew point sensor (10) is disposed within the housing.

23. Fastening device according to at least claim 5, comprising a housing with a holder, wherein a flexible and heat conducting substance (26), preferably a heat conducting silicon adhesive, is disposed on a front surface (18) of the projecting end (27) of the printed board (9) at a mounting point of the surface temperature sensor (4), and the housing with holder is designed to force the printed board (9) including substance (26) to an inner surface, preferably a windscreen (5).

24. Fastening device according to claim 23, **characterized in that** the flexible heat conducting substance is designed as cap which can be pushed onto the end of the printed board at the mounting point of the surface temperature sensor.

25. Fastening device according to claim 23 or 24, **characterized in that** a metal part, in particular, a stamped-bent part, is mounted, preferably soldered, to the mounting point of the surface temperature sensor.

## Revendications

1. Dispositif de fixation (16) avec un dispositif capteur pour déterminer une humidité intérieure ou le point de rosée intérieur d'un volume intérieur limité par une paroi périphérique, en particulier d'un habitable de véhicule automobile (3), et une tendance à l'embuage d'une surface intérieure d'une vitre (5) de l'habitable de véhicule automobile (3), avec
• un capteur de point de rosée (10) conçu pour mesurer une humidité de l'air et une température ambiante du volume intérieur, comportant un élément de détection d'humidité (1) et un capteur de température (2), et
• un capteur de température de surface (4) conçu pour mesurer une température de la surface intérieure,
**caractérisé en ce que**
le dispositif de fixation est réalisé sous la forme d'un pied de rétroviseur (13) d'un rétroviseur de véhicule automobile (14), le capteur de point de rosée (10) étant monté à l'intérieur du dispositif de fixation et le capteur de température de surface (4) pouvant être monté sur la surface intérieure.

2. Dispositif de fixation selon la revendication 1, **caractérisé en ce que** le capteur de température de surface est un capteur par contact, de préférence un élément capteur CTN ou CTP.

3. Dispositif de fixation selon la revendication 2, **caractérisé en ce qu'**un matériau à haute conductibilité thermique est placé entre le capteur de température de surface et la paroi périphérique.

4. Dispositif de fixation selon la revendication 2 ou 3, **caractérisé en ce qu'**il est prévu un découplage thermique entre le capteur de température de surface (4) et le capteur de point de rosée (10).

5. Dispositif de fixation selon au moins une des revendications précédentes, **caractérisé en ce que** le dispositif capteur comprend une carte de circuits imprimés (9), le capteur de point de rosée (10) étant monté sur la carte de circuits imprimés (9).

6. Dispositif de fixation selon au moins une des revendications précédentes, **caractérisé en ce que** le dispositif capteur comprend un feuille thermoconductrice flexible (7), de préférence munie de pistes conductrices, le capteur de température de surface (4) étant fixé sur la feuille (7).

7. Dispositif de fixation selon la revendication 5 et la revendication 6, **caractérisé en ce que** la feuille (7) est reliée de manière électroconductrice à la carte de circuits imprimés (9).

8. Dispositif de fixation selon la revendication 4 et la revendication 5, **caractérisé en ce que** le capteur de température de surface (4) est monté sur la carte de circuits imprimés (9).

9. Dispositif de fixation selon la revendication 8, **caractérisé en ce que** la carte de circuits imprimés (9) présente une forme de base allongée, composée d'une extrémité en saillie (27) et d'une surface porteuse (28), le capteur de température de surface (4) étant monté sur l'extrémité en saillie (27) et le capteur de point de rosée (10) étant disposé sur la surface porteuse (28).

10. Dispositif de fixation selon une des revendications précédentes, **caractérisé en ce qu'**une unité d'évaluation (6) qui est conçue pour calculer le point de rosée à partir du signal de mesure du capteur de point de rosée (10) est prévue de préférence sur la carte de circuits imprimés (9), en particulier sur la surface porteuse (28).

11. Dispositif de fixation selon la revendication 10, **caractérisé en ce que** l'unité d'évaluation (6) est conçue pour déterminer la température de surface à partir du signal de mesure du capteur de température de surface (4), la température de surface déterminée étant de préférence corrigée en fonction des signaux d'un capteur solaire, d'un capteur de pluie, d'un capteur de température extérieure et/ou d'un capteur de vitesse.

12. Dispositif de fixation selon la revendication 11, **caractérisé en ce que** l'unité d'évaluation (6) est conçue pour corriger la température de surface déterminée au moyen d'une fonction du fonction du signal de mesure du capteur de température de surface (4) et du capteur de température (2).

13. Dispositif de fixation selon la revendication 12, **caractérisé en ce que** l'unité d'évaluation (6) est conçue pour corriger la température de surface déterminée par addition de la fonction.

14. Dispositif de fixation selon la revendication 12 ou 13, **caractérisé en ce que** la fonction est la différence, pondérée par une constante, des signaux de mesure du capteur de température de surface (4) et du capteur de température (2).

15. Dispositif de fixation selon une des revendications 11 à 14, **caractérisé en ce que** l'unité d'évaluation (6) est conçue, pour déterminer la tendance à l'embuage, pour comparer le point de rosée calculé avec la température de surface déterminée.

16. Dispositif de fixation selon une des revendications précédentes, **caractérisé en ce que** l'unité d'évaluation (6) est conçue pour délivrer un signal d'alarme en cas de dépassement d'une valeur d'humidité relative de l'air à un emplacement de montage du capteur de température de surface (4).

17. Dispositif de fixation selon une des revendications précédentes, **caractérisé en ce que** l'unité d'évaluation (6) présente une interface (8), de préférence de bus K-Line, CAN ou LIN, avec une commande de climatisation, de préférence une climatisation de véhicule automobile.

18. Dispositif de fixation selon une des revendications précédentes, **caractérisé en ce que** le dispositif capteur présente un boîtier (12) avec un couvercle muni d'une membrane (11) perméable à l'humidité, le capteur de point de rosée (10) étant disposé à l'intérieur du boîtier (12).

19. Dispositif de fixation selon au moins une des revendications précédentes, **caractérisé en ce que** le dispositif capteur comprend un support de capteur avec une surface frontale, le capteur de température de surface (4) étant fixé sur la surface frontale de façon que le capteur de température de surface (4) puisse être fixé de manière thermoconductrice sur la surface intérieure, de préférence par collage de la surface frontale avec la surface intérieure.

20. Dispositif de fixation selon la revendication 19, **caractérisé en ce que** la surface frontale présente une feuille autocollante (20), de préférence avec une feuille protectrice décollable.

21. Dispositif de fixation (16) selon au moins une des revendications précédentes, **caractérisé en ce que** le pied de rétroviseur (13) est réalisé sous la forme d'un recouvrement, dans lequel est intégrée une unité électronique (25) du dispositif capteur, avec un prolongement (19) présentant une forme de tube et un support de capteur (17) pouvant être enfilé sur le prolongement (19) et ayant une surface frontale (18) adaptée à une surface intérieure d'une vitre de véhicule automobile, le support de capteur (17) étant disposé coulissant sur le prolongement (19) de façon que la surface frontale (18) puisse, lorsque le pied de rétroviseur (13) est monté dans un habitacle de véhicule automobile (3), venir s'appliquer contre la surface intérieure de la vitre de véhicule automobile (5) par un coulissement du support de capteur (17).

22. Dispositif de fixation selon la revendication 21, **caractérisé en ce que** le capteur de température de surface (4) est fixé sur la surface frontale (18) de façon que le capteur de température de surface (4) puisse être fixé de manière thermoconductrice sur la surface intérieure de la vitre de véhicule automobile (5), de préférence par collage de la surface frontale (18) avec la surface intérieure, et que le capteur de point de rosée (10) est disposé à l'intérieur du boîtier.

23. Dispositif de fixation au moins selon la revendication 5, comportant un boîtier avec un support, une masse (26) souple et thermoconductrice, de préférence une colle thermoconductrice au silicone, étant appliquée sur une surface frontale (18) de l'extrémité en saillie (27) de la carte de circuits imprimés (9) à un emplacement de montage du capteur de température de surface (4), et le boîtier avec support étant conçu pour presser la carte de circuits imprimés (9) avec la masse (26) contre une surface intérieure, de préférence un pare-brise (5).

24. Dispositif de fixation selon la revendication 23, **caractérisé en ce que** la masse souple thermoconductrice est réalisée sous la forme d'un capuchon qui peut être poussé sur l'extrémité de la carte de circuits imprimés à l'emplacement de montage du capteur de température de surface.

25. Dispositif de fixation selon la revendication 23 ou 24, **caractérisé en ce qu'**une pièce métallique, en particulier une pièce découpée et pliée, est fixée, de préférence par brasage, à l'emplacement de montage du capteur de température de surface.
